# EUROPÄISCHE PATENTSCHRIFT

(11) **EP 1 530 271 B1**
(45) Veröffentlichungstag und Bekanntmachung des Hinweises auf die Patenterteilung: **07.03.2007**
(21) Anmeldenummer: 04026242.0
(22) Anmeldetag: 05.11.2004
(51) Int. Cl.: H01R 43/02, B23K 11/00

(54) **Vorrichtung zum Verschweissen der Adern von Litzen**
Apparatus for welding the strands of wires
Dispositif de soudage des brins de torons

(30) Priorität: 07.11.2003 DE 10352482
(43) Veröffentlichungstag der Anmeldung: 11.05.2005
(73) Patentinhaber: MASCHINEN- UND APPARATEVERTRIEB HELMUT STRUNK, D-57548 Kirchen (DE)
(72) Erfinder: Strunk, Helmut, 57548 Kirchen (DE)
(74) Vertreter: Grosse, Wolf-Dietrich Rüdiger

(56) Entgegenhaltungen:
- EP-A- 0 517 040
- EP-A- 0 527 694
- GB-A- 1 511 700

## Beschreibung

Die Erfindung betrifft eine Vorrichtung zum Verschweißen der Adern einer oder mehrerer, insbesondere aus Kupfer bestehender Litzen, auch verzinnten Litzen, zu einem festen und gasdichten Anschlussknoten, mit einem Verdichtungsraum für mindestens einen eingelegten Litzenabschnitt, wobei die Flanken des Verdichtungsraumes als mit Keramikplatten überfangene, in ihrer Richtung gegeneinander anstellbare Backen ausgeführt sind, und die horizontale Begrenzung des Verdichtungsraums durch die Stirnflächen einer Unterelektrode und einer Oberelektrode gebildet werden.

Beim Einsatz flexibler Litzen für Verkabelungen, insbesondere auch bei der Zusammenfassung von Litzen zu Kabelbäumen, hat es sich bewährt, die für den Anschluss vorgesehenen Litzenenden, ggf. auch Mittelabschnitte von Litzen, nicht nur abzuisolieren, sondern auch zur Verbesserung der Anschlussmöglichkeiten diese zu einem mechanisch festen Anschlussknoten miteinander zu verbinden. Bewährt hat es sich auch, die Verbindung so durchzuführen, dass der Anschlussknoten sich als gasdicht erweist und seiner Umgebung nur seine äußeren Flächen bietet, so dass Oxidationsvorgängen wesentliche Ansatzflächen entzogen sind.

Nach der DE 44 06 337 C2 besteht schon die Möglichkeit, den Verdichtungsraum einer Vorrichtung zum Verschweißen von Litzen auf ein gewünschtes Maß einzustellen. Dazu wird eine der vier Seitenwände stationär ausgeführt, während die übrigen drei Seitenwände auf ein gewünschtes Maß zusammengefahren werden können. Dazu werden exakte Steuerungen benötigt, welche die Vorrichtung zum Verschweißen teuer werden lassen.

Die gattungsgemäße EP 0 517 040 A1 offenbart eine Vorrichtung zum Verschwei-ßen der Adern von Litzen, die ebenfalls exakt arbeitende und damit teuere Antriebe benötigt, um den Verdichtungsraum auf das gewünschte Maß einstellen zu können. Auch hier lassen die für die Einstellung des Verdichtungsraums notwendigen Steuervorrichtungen die Vorrichtung zum Verschweißen teuer werden.

Weiterhin lassen sich mit diesen bekannten Vorrichtungen zwar einzelne oder mehrere Litzen verschweißen, ein Anschweißen von Verbindungselementen ist mit diesen Vorrichtungen nicht möglich. Für das Verschweißen der bereits in den Vorrichtungen nach dem Stand der Technik verschweißten Litzen mit einem Verbindungselement wird regelmäßig eine weitere Schweißvorrichtung benötigt. Oft weisen die Verbindungselemente der Zugentlastung dienende Nasen auf, die um die Isolierung der Litze gecrimpt werden muss. Auch hierzu wird oft eine weitere Maschine benötigt.

Der Erfindung liegt die Aufgabe zugrunde, eine günstige Vorrichtung zum Verschweißen der Adern von Litzen vorzuschlagen, mittels derer zudem Verbindungselemente mit den Litzen verschweißt werden können.

Diese Aufgabe wird dadurch gelöst, dass die Backen gegen gegenüber liegende Flanken der Unterelektrode anstellbar sind, und die Stirnfläche der Unterelektrode formschlüssig zwischen sich aufzunehmen vermögen, dass den Backen jeweils vertikale Führungen zugeordnet sind, über welche die Höhe des Verbindungsraums einstellbar ist und dass die Stirnfläche der Oberelektrode gegen die Backen anstellbar und auf die nach oben weisenden Stirnflächen der Backen formschlüssig anlegbar ist.

Dadurch, dass die Backen lediglich gegen eine vorgegebene Elektrode fahren und hier formschlüssig angelegt werden, wird kein komplizierter, exakt arbeitender und damit teurer Antrieb benötigt. Das formschlüssige Anliegen der Backen an der Elektrode gewährleistet dabei, dass keine Adern der Litze zwischen die Backen und die Unterelektrode gelangen kann, so dass alle Adern der Litze kompaktiert und miteinander verschweißt werden können. Auch die Oberelektrode liegt formschlüssig auf den Backen auf, so dass alle Adern der Litze sicher im Verdichtungsraum verbleiben und hier dem Verschweißvorgang unterzogen werden.

Um unterschiedliche Breiten der verschweißten Adern herstellen zu können, hat es sich bewährt, mindestens zwei in ihren Abmessungen unterschiedliche Unterelektroden vorzusehen, die wahlweise zwischen die Backen positionierbar sind. Hier lassen sich fein abgestufte Unterschiede der Unterelektrodenabmessung aber auch grobe Abstufungen vorstellen, je nach dem, welche Abmessungen der verschweißten Adern gewünscht sind.

Die Höhe des Verdichtungsraumes ließe sich zwar über getrennte Verstellantriebe, die an den Backen angreifen, einstellen, es hat sich jedoch bewährt, dass die Backen durch Federelemente beaufschlagt in ihrer oberen Position der vertikalen Führung gehalten sind und dass die Anstellvorrichtung der Oberelektrode die Backen gegen die Kraft der Federn in die gewünschte Wirkstellung zu bringen vermag.

Damit wird durch das Aufdrücken der oberen Elektrode auf die Backen zunächst der Formschluss erreicht. Bei einem Weiterbewegen der oberen Elektrode wird der Verdichtungsraum auf ein entsprechend gewünschtes Maß in der Höhe eingestellt. Hier ist es möglich, die Anstellvorrichtung der Oberelektrode positionsgeregelt zu fahren oder aber den Backen wählbare Stopps vorzugeben, so dass auch die Anstellvorrichtung der Oberelektrode ohne eine aufwendige Positionsregelung auskommen kann.

Von Vorteil ist, wenn den Backen ein Werkzeug zugeordnet ist, welches Verbindungselemente, wie z. B. Masseverbinder, zu haltern vermag, die mit der mindestens einen Litze verschweißbar sind. Die Verbindungselemente, wie z. B. der Masseverbinder, weisen einen Bereich auf, der nach Verbindung mit der Litze zum Verbinden mit einer anderen Komponente gedacht ist. Masseverbinder weisen zu diesem Zwecke oft eine Öse auf, die später zur Aufnahme einer Verbindungsschraube dient. Das Werkzeug kann z. B. eine Halterung für eine entsprechende Öse aufweisen, welches den Masseverbinder außerhalb des Schweißelektrodenbereichs haltert und den zu verschweißenden Bereich des Masseverbinders in den Bereich des oben offenen Verdichtungsraums ragen lässt. Beim Herunterfahren der Oberelektrode und dem anschließenden Herunterfahren der Backen wird auch das mit diesen in Verbindung stehende Werkzeug nach unten gefahren, so dass der Bereich des Verbindungselements, welcher mit den Litzen zu verschweißen ist, auf diese aufgedrückt wird.

Weist die Vorrichtung noch einen Stempel auf, der im Bereich außerhalb der abisolierten, im Verdichtungsraum eingelegten Litzeabschnitte auf im Werkzeug gehaltene Verbindungselemente zur Einwirkung bringbar ist, so können die als Zugentlastung dienenden Nasen des Verbindungselements in einem an den Schweißvorgang unmittelbar anschließenden, im gleichen Arbeitsschritt erfolgende Crimpvorgang um die Isolierung der Litze umgelegt werden.

Von Vorteil ist, dass die Vorrichtung einer Steuer- bzw. Regelvorrichtung zugeordnet ist, über welche in Abhängigkeit der zu verschweißenden Litze die Größe der Unterelektrode und/oder die vertikale Anstellposition der Backen und/oder der Schweißstrom und/oder die Ansteuerung des Stempels vorgebbar und/oder regelbar ist. Die Steuer- bzw. Regelvorrichtung kann somit in Abhängigkeit des Querschnitts der zu verschweißenden Litze eine möglichst günstige Unterelektrode vorgeben, und kann ggf. die Anstellposition der Backen sowie den Schweißstrom und die Ansteuerung des Stempels bewirken.

Die Erfindung wird anhand einer Zeichnung näher erläutert. Dabei zeigen:
- Fig. 1: eine erfindungsgemäße Vorrichtung,
- Fig. 2 + 3: mögliche Schweißschritte,
- Fig. 4: eine erfindungsgemäße Vorrichtung mit eingelegtem Verbindungselement,
- Fig. 5: mögliche Schweißschritte,
- Fig. 6: den erfindungsgemäßen Stempel.

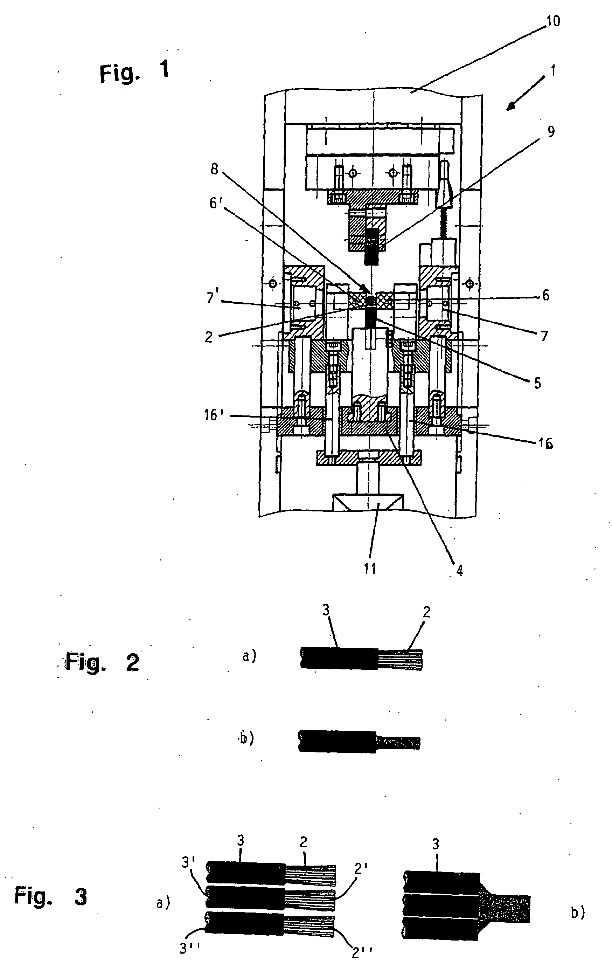

Figur 1 zeigt eine Vorrichtung 1 zum Verschweißen der Adern 2, einer Litze 3. Die Vorrichtung 1 weist eine Halterung 4 für mehrere z.B. hintereinander angeordnete Unterelektroden 5 auf. Die verschiedenen Unterelektroden 5 können wahlweise zwischen die als mit Keramikplatten überfangene Backen 6, 6' eingeklemmt werden. Dazu weisen die Backen Antriebsvorrichtungen 7, 7' auf, mittels derer die Backen 6, 6' horizontal gegen die Flanken der Unterelektrode 5 verfahrbar sind. Durch die Stirnfläche der Unterelektrode 5 und die Flanken der Backen 6, 6' wird der Unterteil eines Verdichtungsraum 8 gebildet, in dem die Adern 2 einer Litze 3 eingelegt sind. Es besteht durchaus die Möglichkeit, hier eine Vielzahl von Litzen 3, 3', 3" in den Verdichtungsraum 8 einzubringen.

Oberhalb der Backen 6, 6' ist eine Oberelektrode 9 gezeigt, die mittels eines Antriebes 10 gegen die Backen 6, 6' anstellbar ist. Die Backen 6, 6' sind mittels Führungen 16, 16' vertikal anstellbar, und werden durch Federelemente 11 in ihrer oberen Position gehalten. Durch die Kraft des Antriebes 10 können die Federelemente auf ein vorbestimmbares Maß zusammengepresst werden. Dabei gibt das vorbestimmbare Maß die Höhe des Verdichtungsraumes 8 vor.

Die Unterelektrode 5 und die Oberelektrode 9 sind mit nicht gezeigten Elektroanschlüssen versehen. Nachdem die Backen 6, 6' zusammengefahren sind und die Oberelektrode 9 auf die Adern 2 der Litze 3 aufgepresst worden sind, sind die A-dem entsprechend kompaktiert. Wird nunmehr der Schweißstrom eingeschaltet, können die Kupferadem, ggf. auch verzinnte Kupferadern, miteinander verschweißt werden.

Figur 2a zeigt die Litze 3 mit den Adern 2 vor dem Einlegen in den Verdichtungsraum 8. Figur 2b zeigt die Litze 3 mit kompaktierten und zusammengeschweißten Adern 2.

Ähnlich sind in Figur 3 drei Litzen 3, 3', 3" zu sehen, deren Adern 2, 2', 2" noch nicht kompaktiert und verschweißt sind. In Figur 3b sind die Adern 2, 2', 2" kompaktiert und miteinander zu einem entsprechenden Endverbinder verschweißt.

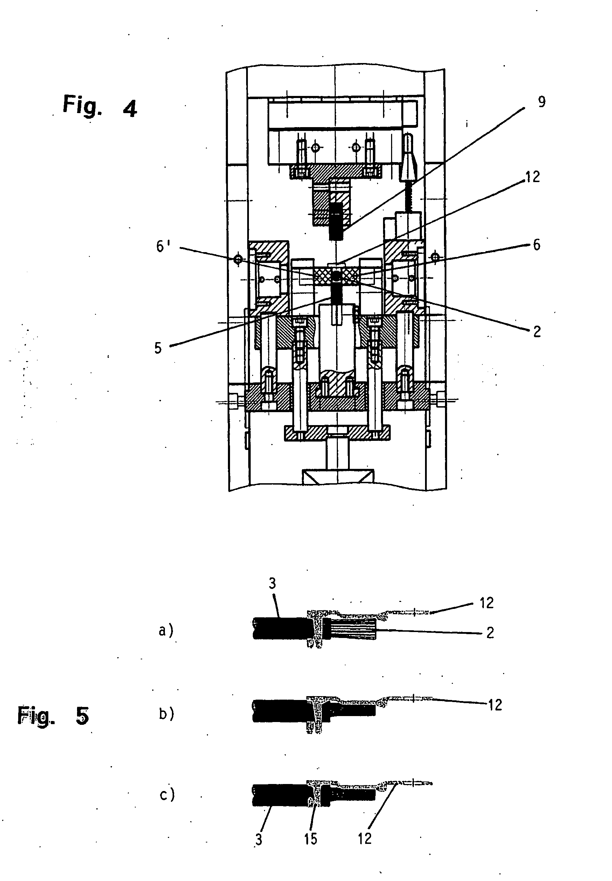

Figur 4 zeigt die Vorrichtung 1 nach Figur 1, jedoch ist im Bereich der nach oben weisenden Stirnflächen der Backen 6, 6' ein Verbindungselement 12 in einem nicht gezeigten, vor der Schnittebene liegenden Werkzeug gehaltert. Bei einer Vorrichtung 1 nach Figur 4 wird die Oberelektrode 9 gegen die Backen 6, 6' angefahren. Dabei wird das Verbindungselement 12 nach unten auf die Adern 2 gepresst, welche durch die Anstellkraft des Antriebs 10 kompaktiert werden. Wird nunmehr der Schweißstrom eingeschaltet, so werden die kompaktierten Adern miteinander und mit dem Verbindungselement 2 verschweißt.

Figur 5a zeigt die Ausgangssituation wie in Figur 4 angedeutet, während Figur 5b die verschweißten Adern und das mit den Adern verschweißte Verbindungselement 12 zeigt.

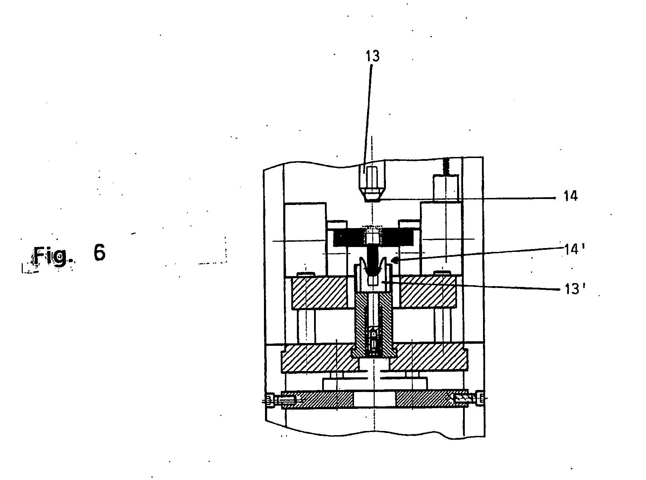

Hinter der in Figur 1 und 4 gezeigten Ebene befindet sich gemäß Figur 6 ein erfindungsgemäßer Stempel 13, 13', dessen Werkzeuge 14, 14' nach erfolgtem Verschweißen des Masseverbinders und während die Oberelektrode noch auf den Backen 6, 6' und dem Verbindungselement 12 aufliegt, zusammengefahren werden können. Dadurch werden die als Zugentlastung 15 dienenden Fahnen um die Isolierung der Litze 3 gecrimpt. Figur 5c zeigt die fertiggestellte Litze 3, bei der die Adern 2 kompaktiert und verschweißt und zusätzlich mit dem Verbindungselement 12 verschweißt sind und bei denen die Zugentlastung um die Isolierung der Litze 3 gecrimpt ist.

### Bezugszeichenübersicht

- 1.: Vorrichtung
- 2.: Adern
- 3.: Litze
- 4.: Halterung
- 5.: Unterelektrode
- 6.: Backen
- 7.: Antriebe
- 8.: Verdichtungsraum
- 9.: Oberelektrode
- 10.: Antrieb
- 11.: Federelement
- 12.: Verbindungselement
- 13.: Stempel
- 14.: Werkzeug
- 15.: Zugentlastung
- 16.: Führungen

## Patentansprüche

1. Vorrichtung (1) zum Verschweißen der Adern (2, 2', 2") einer oder mehrerer, insbesondere aus Kupfer bestehender Litzen (3, 3', 3"), auch verzinnten Litzen (3, 3', 3") zu einem festen und gasdichten Anschlussknoten mit einem Verdichtungsraum (8) für mindestens einen eingelegten Litzenabschnitt, wobei die Flanken des Verdichtungsraums (8) als mit Keramikplatten überfangene, in ihrer Richtung gegeneinander anstellbare Backen (6, 6'), ausgeführt sind, und die horizontale Begrenzung des Verdichtungsraums (8) durch die Stirnflächen einer Unterelektrode (5) und einer Oberelektrode (9) gebildet werden,
**dadurch gekennzeichnet,**
**dass** die Backen (6, 6') gegen gegenüberliegende Flanken der Unterelektrode (5) anstellbar sind, und die Stirnfläche der Unterelektrode (5) formschlüssig zwischen sich aufzunehmen vermögen, dass den Backen jeweils vertikale Führungen (16, 16') zugeordnet sind, über welche die Höhe des Verdichtungsraums (8) einstellbar ist und dass die Stirnfläche der Oberelektrode (9) gegen die Backen (6, 6') anstellbar und auf die nach oben weisenden Stirnflächen der Backen (6, 6') formschlüssig auflegbar ist.

2. Vorrichtung nach Anspruch 1,
**dadurch gekennzeichnet,**
**dass** mindestens zwei in ihren Abmessungen unterschiedliche Unterelektroden (5) vorgesehen sind, die wahlweise zwischen den Backen (6, 6') positionierbar sind.

3. Vorrichtung nach Anspruch 1 oder 2,
**dadurch gekennzeichnet,**
**dass** die Backen (6, 6') durch Federelemente (11) beaufschlagt in der oberen Position der vertikalen Führung (16, 16') gehalten sind, und dass die Anstellvorrichtung (10) der Oberelektrode (9) die Backen (6, 6') gegen die Kraft der Federelemente (11) in die gewünschte vertikale Wirkstellung zu bringen vermag.

4. Vorrichtung nach einem der Ansprüche 1 bis 3,
**dadurch gekennzeichnet,**
**dass** den Backen (6, 6') ein Werkzeug zugeordnet ist, welches Verbindungselemente (12), wie z. B. Masseverbinder, zu haltern vermag, die mit der mindestens einen Litze (3, 3', 3") verschweißbar sind.

5. Vorrichtung nach Anspruch 4,
**dadurch gekennzeichnet,**
**dass** die Vorrichtung einen Stempel (13, 13') aufweist, der im Bereich außerhalb der abisolierten, im Verdichtungsraum (8) eingelegten Adern (2) auf im Werkzeug gehalterte Verbindungselemente (12) zur Einwirkung bringbar ist.

6. Vorrichtung nach einem der Ansprüche 1 bis 5,
**dadurch gekennzeichnet,**
**dass** der Vorrichtung (1) eine Steuer- bzw. Regelvorrichtung zugeordnet ist, über welche in Abhängigkeit der zu verschweißenden Litze (3, 3', 3") die Grö-ße der Unterelektrode (5) und/oder die vertikale Anstellposition der Backen (6, 6') und/oder der Schweißstrom und/oder die Ansteuerung des Stempels (13, 13') vorgebbar und/oder regelbar ist.

## Claims

1. A device (1) for welding the cores (2, 2', 2") of one or more flexible leads (3, 3', 3") made in particular of copper, also tin-coated flexible leads (3, 3', 3"), to a fixed and gas-tight connection junction, with a compression space (8) for at least one inserted flexible-lead segment, wherein the sides of the compression space (8) are constituted as cheeks (6, 6') covered by ceramic plates and adjustable in their direction towards one another, and the horizontal boundary of the compression space (8) is formed by the end faces of a lower electrode (5) and an upper electrode (9),
**characterised in that**
the cheeks (6, 6') can be adjusted towards opposite sides of the lower electrode (5) and are capable of taking up the end face of the lower electrode (5) between them in a positively locking manner, that there are assigned to the cheeks in each case vertical guides (16, 16'), by means of which the height of the compression space (8) can be adjusted, and that the end face of the upper electrode (9) can be adjusted towards the cheeks (6, 6') and placed in a positively locking manner onto the upwardly pointing end faces of the cheeks (6, 6').

2. The device according to claim 1,
**characterised in that**
at least two lower electrodes (5) differing in their dimensions are provided, said lower electrodes optionally being able to be positioned between the cheeks (6, 6').

3. The device according to claim 1 or 2,
**characterised in that**
the cheeks (6, 6') are held, acted upon by spring elements (11), in the upper position of the vertical guide (16, 16'), and that the adjustment device (10) of the upper electrode (9) is capable of bringing the cheeks (6, 6') into the desired vertical active position against the force of the spring elements (11).

4. The device according to any one of claims 1 to 3,
**characterised in that**
there is assigned to the cheeks (6, 6') a tool which is capable of holding connecting elements (12), such as for example bonding clips, which can be welded to the at least one flexible lead (3, 3', 3").

5. The device according to claim 4,
**characterised in that**
the device has a stamp (13, 13') which can be brought into action on the connecting elements (12) held in the tool in the region outside the stripped cores (2) inserted in the compression space (8).

6. The device according to any one of claims 1 to 5,
**characterised in that**
there is assigned to the device (1) an automatic control device, by means of which the size of the lower electrode (5) and/or the vertical adjustment position of the cheeks (6, 6') and/or the welding current and/or the control of the stamp (13, 13') can be preselected or regulated depending on the flexible lead (3, 3', 3") to be welded,

## Revendications

1. Dispositif (1) pour souder les brins (2, 2', 2") d'un ou de plusieurs torons (3, 3', 3") consistant notamment en cuivre, également de torons étamés (3, 3', 3") en un noeud de jonction fixe et étanche au gaz, avec une chambre de compression (8), pour au moins un tronçon de toron inséré, les flancs de la chambre de compression (8) étant réalisés sous la forme de mâchoires (6, 6') doublées de plaques en céramique, susceptibles d'être mises en prise l'une contre l'autre dans leur direction, et la délimitation horizontale de la chambre de compression (8) étant formée par les surfaces frontales d'une électrode inférieure (5) et d'une électrode supérieure (9),
**caractérisé en ce que** les mâchoires (6, 6') sont susceptibles d'être mises en prise contre des flancs opposés de l'électrode inférieure (5) et sont capables de réceptionner entre elles par complémentarité de forme la surface frontale de l'électrode inférieure (5), **en ce que** respectivement des guidages verticaux (16, 16'), par l'intermédiaire desquels la hauteur de la chambre de compression (8) est réglable sont associés aux mâchoires et **en ce que** la surface frontale de l'électrode supérieure (9) est susceptible d'être mise en prise contre les mâchoires (6, 6') et est susceptible de s'appuyer sur les surfaces frontales dirigées vers le haut des mâchoires (6, 6').

2. Dispositif selon la revendication 1, **caractérisé en ce qu'**on a prévu au moins deux électrodes inférieures (5) de dimensions différentes, qui sont positionnables au choix entre les mâchoires (6, 6').

3. Dispositif selon la revendication 1 ou 2, **caractérisé en ce que** les mâchoires (6, 6') sont maintenues sous l'effet d'éléments à ressorts (11) dans la position supérieure du guidage vertical (16, 16') et **en ce que** le dispositif de mise en prise (10) de l'électrode supérieure (9) est capable d'amener les mâchoires (6, 6') dans la position active verticale souhaitée, à l'encontre de la force des éléments à ressorts (11).

4. Dispositif selon l'une quelconque des revendications 1 à 3, **caractérisé en ce qu'**un outil capable de maintenir des éléments de liaison (12), tels que par exemple des bornes de mise à la masse, susceptibles d'être soudés avec le au moins un toron (3, 3', 3") est associé aux mâchoires (6,6').

5. Dispositif selon la revendication 4, **caractérisé en ce que** le dispositif comporte un poinçon (13, 13') qui dans la région extérieure des brins (2) dénudés, insérés dans la chambre de compression (8) est susceptible d'être amené en action sur des éléments de liaison (12) maintenus dans l'outil.

6. Dispositif selon l'une quelconque des revendications 1 à 5, **caractérisé en ce qu'**un dispositif de commande ou de réglage, par l'intermédiaire duquel, en fonction du toron à souder (3, 3', 3"), la dimension de l'électrode inférieure (5) et/ou la position de mise en prise verticale des mâchoires (6, 6') et ou le courant de soudage et/ou l'activation du poinçon (13, 13') sont prédéfinissables et/ou réglables est associé au dispositif (1).
